# EUROPÄISCHE PATENTANMELDUNG

(11) **EP 4 541 518 A1**
(43) Veröffentlichungstag der Anmeldung: **23.04.2025**
(21) Anmeldenummer: 23204704.3
(22) Anmeldetag: 19.10.2023
(51) Int. Cl.: B25J 5/00, B25J 11/00, B25J 19/00, B25J 19/02

(54) **BAUROBOTER MIT REINIGUNGSVORRICHTUNG**

(71) Anmelder: Hilti Aktiengesellschaft, 9494 Schaan (LI)
(72) Erfinder: Lukic, Sasha, 9470 Buchs (CH); Knyrim, Maximilian, 89584 Ehingen (DE)
(74) Vertreter: Hilti Aktiengesellschaft Corporate Intellectual Property

(57) **Zusammenfassung**

Die Erfindung betrifft einen **Bauroboter (10)** zur Ausführung von Bauaufgaben, beispielsweise auf einer Hochbau-Baustelle oder einer Tiefbau-Baustelle, umfassend eine Fahrplattform (12) sowie einen an der Fahrplattform (12) angeordneten Roboterarm (18), wobei an dem Roboterarm (18) ein Sensor (24) mit wenigstens einer Sensoroberfläche (26) angeordnet ist. Um die Zuverlässigkeit des Bauroboters zu verbessern, ist vorgesehen, dass der Bauroboter (10) eine Reinigungsvorrichtung (30) zur Reinigung des Sensors (24) aufweist.

## Beschreibung

Die Erfindung geht aus von einem Bauroboter zur Ausführung von Bauaufgaben, umfassend eine Fahrplattform sowie einen an der Fahrplattform angeordneten Roboterarm. An dem Roboterarm ist ein Sensor mit wenigstens einer Sensoroberfläche angeordnet. Durch die Fahrplattform ist der Bauroboter mobil.

Derartige Bauroboter kommen vermehrt zum Einsatz, um beispielsweise Bauarbeiter von belastenden oder gefährlichen Bauarbeiten zu entlasten. Damit der Bauroboter seine Bauaufgaben möglichst autonom und dennoch qualitativ hochwertig ausführen kann, werden seine Bewegungen häufig durch Sensoren, beispielsweise Kameras, überwacht. Beispielsweise kann ein an einem Endeffektor des Roboterarms befindlicher Bohrer mit Hilfe einer Kamera überwacht werden. So kann sichergestellt werden, dass beispielsweise der Bohrer an einer geeigneten Position bohrt. Es kann auch beispielsweise überwacht werden, ob während der Ausführung der Bauaufgabe, beispielsweise während eines Bohrvorganges, unbeabsichtigte Ereignisse aufgetreten sind. Beispielsweise kann mit Hilfe der Kamera während des Bohrvorganges identifiziert werden, ob es zu unerwünschten Ausbrüchen an Bohrlochrändern gekommen ist.

Jedoch entsteht üblicherweise bei der Ausführung von Bauaufgaben, wie beispielsweise beim Bohren von Bohrlöchern in Gestein, Schmutz, insbesondere Staub. Der Schmutz kann sich auf einer Sensoroberfläche des Sensors ablagern. Dann kann der Sensor die Ausführung der Bauaufgabe nicht mehr wie vorgesehen überwachen. Dadurch kann es passieren, dass die Bauaufgabe nicht ordnungsgemäß ausgeführt wird. Dies kann zu einem Sicherheitsproblem führen, wenn sicherheitsrelevante Anforderungen an die Ausführung der Bauaufgabe gestellt werden müssen, deren Einhaltung aber nicht mehr überprüft werden kann.

Aufgabe der vorliegenden Erfindung ist es daher, einen Bauroboter der eingangs genannten Art anzubieten, der eine sichere Ausführung von Bauaufgaben ermöglicht.

Gelöst wird die Aufgabe durch einen Bauroboter zur Ausführung von Bauaufgaben, beispielsweise auf einer Hochbau-Baustelle oder einer Tiefbau-Baustelle, umfassend eine Fahrplattform sowie einen an der Fahrplattform angeordneten Roboter, wobei an dem Roboterarm ein Sensor mit wenigstens einer Sensoroberfläche angeordnet ist, wobei der Bauroboter eine Reinigungsvorrichtung zur Reinigung des Sensors, insbesondere der Sensoroberfläche, aufweist.

Unter einer Reinigung des Sensors kann eine Reinigung des eigentlichen Sensors selbst verstanden werden. Darüber hinaus kann aber auch eine Reinigung von Elementen entlang eines Detektionsweges zwischen dem Sensor und einem vom Sensor zu überwachenden Objekt, beispielsweise eine zu bearbeitende Oberfläche, verstanden werden. Handelt es sich um einen optischen Sensor, beispielsweise eine Kamera oder ein LIDAR, so können sich zwischen einer Aufnahmeeinheit der Kamera und dem zu überwachenden Objekt noch weitere Gläser oder sonstige durchsichtige Elemente, beispielsweise Linsen oder Schutzgläser, befinden. In diesem Beispiel entspricht der Detektionsweg der Strecke zwischen der Aufnahmeeinheit und der zu überwachenden Oberfläche. Die Reinigung des Sensors kann somit auch eine Reinigung eines oder mehrerer der Gläser oder der sonstigen durchsichtigen Elemente umfassen. Dementsprechend kann unter der Sensoroberfläche nicht nur eine Oberfläche des Sensors selbst, beispielsweise eine Oberfläche der Aufnahmeeinheit, verstanden werden. Unter der Sensoroberfläche kann auch eine Oberfläche verstanden werden, die sich entlang des Detektionsweges befindet, beispielsweise eine oder mehrere Oberflächen eines oder mehrerer der Gläser oder der sonstigen durchsichtigen Elemente.

Allgemein liegt dem der Gedanke zugrunde, dass es durch die Reinigungsvorrichtung möglich ist, sich entlang des Detektionsweges befindlicher Schmutz, insbesondere auf der Sensoroberfläche befindlicher Schmutz, zu entfernen. Dadurch kann der Sensor selbst bei hoher Schmutzbelastung oder dergleichen zumindest überwiegend einwandfrei funktionieren. Die Ausführung der Bauaufgaben durch den Bauroboter kann somit selbst bei hohem Aufkommen von Staub oder dergleichen überwacht werden. Fehler, die bei der Ausführung der Bauaufgaben entstehen, können trotz der Schmutzbelastung detektiert werden. Der Bauroboter kann auf einen detektierten Fehler hin ein Warnsignal abgeben und / oder den Fehler beheben.

Denkbar ist, dass der Sensor regelmäßig, insbesondere in periodischen Abständen, mit Hilfe der Reinigungsvorrichtungen gereinigt wird.

Die Häufigkeit der Reinigungen kann von der Art der auszuführenden Bauaufgaben abhängen. Denkbar ist auch, alternativ oder ergänzend andere Parameter zu berücksichtigen. Beispielsweise kann die Häufigkeit der Reinigung auch von einer Distanz zwischen dem Sensor, insbesondere der Sensoroberfläche, und einer Werkzeugmaschine des Bauroboters und / oder einer Arbeitsposition, die von der Werkzeugmaschine bearbeitet wird, abhängen. Erfahrungsgemäß breiten sich die bei der Ausführung der Bauaufgabe bildenden Stäube überwiegend in ein umliegenden Bereich um die Arbeitsposition aus. Befindet sich daher der Sensor in einer gewissen Distanz, so ist zu erwarten, dass seine Staubbelastung geringer ausfällt, je weiter weg er sich von der Arbeitsposition befindet.

Die Reinigungsvorrichtung kann eine Saugvorrichtung umfassen. Die Saugvorrichtung kann beispielsweise ein Staubsauger sein.

Alternativ oder ergänzend ist auch denkbar, dass die Reinigungsvorrichtung eine Blasvorrichtung umfasst. Vorzugsweise können die Saugvorrichtung und die Blasvorrichtung als ein einziges Gerät ausgebildet sein.

Denkbar ist auch, zur Erzeugung eines Luftstroms Abluft einer an den Bauroboter montierten Werkzeugmaschine verwendet wird. Alternativ oder ergänzend ist denkbar, eine Saugvorrichtung und / oder Blasvorrichtung, die an der Werkzeugmaschine angeordnet und / oder ausgebildet ist, zur Reinigung des Sensors, insbesondere der Sensoroberfläche, mitzubenutzen. Dementsprechend kann der Schlauch von oder zur Werkzeugmaschine geführt sein.

Denkbar ist auch, dass die Reinigungsvorrichtung einen Wischer umfasst. Hartnäckig festsitzender Schmutz auf der Sensoroberfläche, der sich beispielsweise weder absaugen noch wegblasen lässt, kann dann mit Hilfe des Wischers von der Sensoroberfläche weggewischt werden.

Um die Reinigungsleistung der Reinigungsvorrichtungen noch weiter zu verbessern, kann ein Reinigungsmittel auf die Sensoroberfläche gesprüht werden. Dazu kann vorzugsweise die Reinigungsvorrichtungen einen Sprühkopf zum Sprühen des Reinigungsmittels aufweisen.

Der Bauroboter kann eine Steuerung aufweisen. Die Steuerung kann eingerichtet sein, den Roboterarm zu steuern. Befindet sich der Sensor am Roboterarm, so ist denkbar, den Roboterarm so zu steuern, dass die Sensoroberfläche in einen Wirkbereich der Reinigungsvorrichtung gelangt. Unter dem Wirkbereich der Reinigungsvorrichtung kann dabei der Raum verstanden werden, innerhalb dessen die Reinigungsvorrichtung, beispielsweise der Wischer, die Sensoroberfläche reinigen, im Falle des Wischers insbesondere kontaktieren, kann.

Damit dies selbsttätig erfolgen kann, ist denkbar, dass die Steuerung eingerichtet ist, den Roboterarm so zu steuern, dass die Sensoroberfläche in den Wirkbereich der Reinigungsvorrichtung gelangt. Beispielsweise ist denkbar, dass der Sensor sich am Endeffektor befindet. Der Sensor kann eine Kamera zur Überwachung des Bohrers sein. Die Reinigungsvorrichtung kann beispielsweise an einem Gehäuse des Bauroboters angeordnet sein. Sie kann den Sprühkopf, den Wischer und / oder die Blasvorrichtung aufweisen. Dann ist beispielsweise denkbar, dass die Steuerung eingerichtet ist, den Endeffektor zunächst in die Nähe der Reinigungsvorrichtung zu bewegen, sodass der Sprühkopf Reinigungsmittel auf die Sensoroberfläche sprühen kann. Anschließend kann die Sensoroberfläche über den Wischer hinwegstreichen. Somit kann die Sensoroberfläche gereinigt werden. Verbleibender Schmutz sowie Feuchtigkeit kann mit Hilfe der Blasvorrichtung von der Sensoroberfläche weggeblasen werden. Dazu kann die Steuerung eingerichtet sein, nach Überstreichen des Wischers die Sensoroberfläche in eine Position zu bewegen, an der die Sensoroberfläche von einem Luftstrom der Blasvorrichtung getroffen werden kann.

Die Steuerung kann auch eingerichtet sein, den Sensor, insbesondere die Sensoroberfläche, schräg vertikal oder horizontal nach unten vor und / oder während einer Reinigung mit Hilfe der der Reinigungsvorrichtung, insbesondere mit Hilfe der Saugvorrichtung und / oder der Blasvorrichtung, auszurichten. Dann kann Schmutz vom Sensor oder der Sensoroberfläche sich schwerkraftbedingt ablösen oder zumindest kann die Wirkung der Reinigungsvorrichtung durch die Schwerkraft verbessert werden, sodass die Reinigungsleistung verbessert werden kann.

Alternativ oder ergänzend zu einer periodischen Reinigung des Sensors, insbesondere der Sensoroberfläche, ist auch denkbar, dass der Bauroboter eingerichtet ist, eine Verschmutzung des Sensors zu detektieren. Dann kann die Sensoroberfläche bedarfsweise gereinigt werden. Auch dies kann die Zuverlässigkeit des Bauroboters verbessern.

Dazu kann eine separate Erkennungsvorrichtung vorgesehen sein, die Verschmutzungen des Sensors oder insbesondere seiner Sensoroberfläche erkennen kann. Dies kann beispielsweise eine weitere Kamera mit angeschlossener Bildauswerteeinheit sein. Eine kostengünstigere Ausführungsform ist jedoch auch denkbar, wenn der Bauroboter eingerichtet ist, die Verschmutzung durch Auswertung eines vom Sensor erzeugten Sensorsignals zu detektieren. Ist der Sensor beispielsweise eine Kamera, so wird Schmutz, der sich auf der Aufnahmeeinheit oder auf einem im Detektionsweg befindlichen Glas befindet, zu einem dunklen Fleck in von der Kamera aufgenommenen Bildern führen. Der dunkle Fleck bleibt an derselben Stelle der Bilder unabhängig von Bewegungen des Roboterarms oder insbesondere der Kamera. Durch diese Invarianz und im Vergleich zu Bildaufnahmen einer sauberen Sensoroberfläche lässt sich somit sehr einfach erkennen, ob sich Schmutz auf der Sensoroberfläche befindet. In analoger Weise lässt sich beispielsweise auch erkennen, ob bei einem Sensor, der als LI DAR ausgebildet ist, Schmutz auf dessen Sensoroberfläche sich befindet. In diesem Fall wird der Lidar unabhängig von seiner Position oder Ausrichtung stets eine sehr kurze gemessene Distanz als Sensorsignal liefern.

Zumindest ein Teil der Reinigungsvorrichtung, insbesondere die Saugvorrichtung und / oder die Blasvorrichtung, kann an einem Werkzeugwechsler des Bauroboters angeordnet sein. Damit der Bauroboter Werkzeuge oder Werkzeugmaschinen selbsttätig wechseln kann, kann der Werkzeugwechsler innerhalb eines Bewegungsbereichs des Roboterarms angeordnet sein. Befinden sich nun der Teil der Reinigungsvorrichtung am Werkzeugwechsler, so kann damit der Roboterarm mit seinem Endeffektor auch aktiv Reinigungsvorrichtung bewegt werden. Der Sensor oder seine Sensoroberfläche können somit auch dann selbsttätig gereinigt werden, wenn sich die Reinigungsvorrichtung nicht direkt in der Nähe des Sensors befindet.

Bei einer Klasse von Ausführungsformen der Erfindung ist ein Schlauch von der Blasvorrichtung an die Sensoroberfläche geführt, so dass bei Betrieb der Blasvorrichtung ein Fluid, beispielsweise Luft oder eine Reinigungsflüssigkeit wie Wassser oder Wasser mit Reinigungszusätzen, aus dem Schlauch auf die Sensoroberfläche strömen kann. Somit kann die Sensoroberfläche durch Wegblasen von Schmutz kontinuierlich gereinigt werden, und zwar unabhängig davon, in welcher Position sich der Roboterarm und insbesondere der Endeffektor, wenn sich der Sensor am Endeffektor befindet, befindet. Denkbar ist auch, einen Luftstrom auf oder vor die Sensoroberfläche, insbesondere entlang des Detektionsweges, zu blasen, um so Schmutzablagerungen vorzubeugen.

In analoger Weise ist es auch denkbar, dass ein Schlauch von der Saugvorrichtung an die Sensoroberfläche geführt ist, so dass bei Betrieb der Saugvorrichtung ein Fluid beispielsweise Luft, von einer Umgebung der Sensoroberfläche in den Schlauch strömt.

Denkbar ist, dass der Schlauch der Saugvorrichtung derselbe Schlauch ist, der auch zur Blasvorrichtung führt. Insbesondere ist dies vorteilhaft, wenn die Blasvorrichtung und die Saugvorrichtung als ein Gerät ausgeführt sind. Das Gerät kann beispielsweise zwischen einem Saug-Betriebsmodus und einem Blas-Betriebsmodus umschaltbar sein. Beispielsweise kann durch Blasen von Luft auf die Sensoroberfläche Schmutz zunächst gelockert werden und dann anschließend durch Saugen von der Sensoroberfläche abgesaugt werden. Dadurch lässt sich eine besonders gute Reinigungswirkung der Reinigungsvorrichtungen erreichen.

Besonders vorteilhaft sind die vorangehend genannten Maßnahmen, wenn der Sensor sich in einer Distanz zur Arbeitsposition oder zum zu bearbeitenden Objekt, beispielsweise zu einer zu bearbeitenden Oberfläche, befindet. Dann kann der Sensor als Kamera oder als optischer Distanzmesser, beispielsweise in Form eines LIDAR, ausgebildet sein.

Der Bauroboter kann zur Ausführung von Bauarbeiten auf einer Hochbau-Baustelle oder einer Tiefbau-Baustelle ausgebildet sein. Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein, insbesondere können entsprechende Werkzeuge an ihm lösbar anordenbar sein.

Der Roboterarm kann eine Hubvorrichtung aufweisen, um seinen Wirkbereich zu vergrößern. Der Roboterarm kann wenigstens drei Freiheitsgrade aufweisen. Insbesondere kann er wenigstens sechs Freiheitsgrade aufweisen. Dadurch kann er besonders zur Bearbeitung von Wänden und Decken und / oder Böden geeignet sein. Der Bauroboter kann insgesamt wenigstens zehn Freiheitsgrade aufweisen.

Die Fahrplattform kann ein Räderfahrwerk und / oder ein Kettenfahrwerk umfassen.

Der Sensor kann eine Auswertungseinheit umfassen. Die Auswertungseinheit kann als Teil der Steuerung ausgebildet sein. Sie kann mit Hilfe eines lokal am Bauroboter befindlichen Rechners und / oder mit Hilfe eines entfernten Rechners, beispielsweise eines Cloud-basierten Rechners, implementiert sein.

Insbesondere für den Fall, dass der Sensor ein optischer Sensor ist, kann die Auswertungseinheit eine Bildauswertungseinheit aufweisen. Die Bildauswertungseinheit kann einen trainierbaren maschinellen Lerner, beispielsweise eine Deep Learning-Einheit, umfassen. Die Auswertungseinheit kann eingerichtet sein, wenigstens eine Invarianz in vom Sensor aufgenommenen Sensordaten zu detektieren, wenn sich der Roboterarm an wenigstens zwei verschiedene Positionen bewegt.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter und
- Fig. 2: den Roboterarm des Bauroboters mit einer Reinigungsvorrichtung.

In der nachfolgenden Beschreibung der Figuren werden zur Erleichterung des Verständnisses der Erfindung für gleiche oder sich funktional entsprechende Elemente jeweils die gleichen Bezugszeichen verwendet.

**Fig**. **1** zeigt einen Bauroboter **10** mit einer als Kettenfahrwerk ausgebildeten Fahrplattform **12,** einem in einem Gehäuse **14** ausgebildeten Steuerraum **16** und einem oberseitig des Gehäuses 14 angeordneten Roboterarm **18.** Der Roboterarm 18 umfasst eine Hubvorrichtung **17** zur vertikalen Verlagerung und einen multiaxial steuerbaren Arm **19.**

Am freien Ende des Arms 19 befindet sich ein Endeffektor **20** mit einer Wechselschnittstelle **21.**

An der Wechselschnittstelle 21 ist ein Werkzeug **22,** insbesondere eine Gesteinsbohrwerkzeugmaschine mit einer Staubabsaugungsvorrichtung, angeordnet. An der

Wechselschnittstelle 21 befindet sich ferner ein Sensor **24** in Form einer Kamera. Der Sensor 24 weist eine durchsichtige Sensoroberfläche **26** auf, durch die somit Licht von einer von dem als Kamera ausgebildeten Sensor 24 überwachten Umgegend, beispielsweise einer Oberfläche, zu einem optoelektronischen Sensorchip des Sensors 24 gelangen kann. Die Sensoroberfläche 26 kann somit den Sensorchip vor beispielsweise Staub schützen, kann aber selbst durch Schmutz, beispielsweise Staub, verschmutzen, sodass sich die Bildqualität der von dem Sensor 24 aufgenommenen Bilder verschlechtern würde.

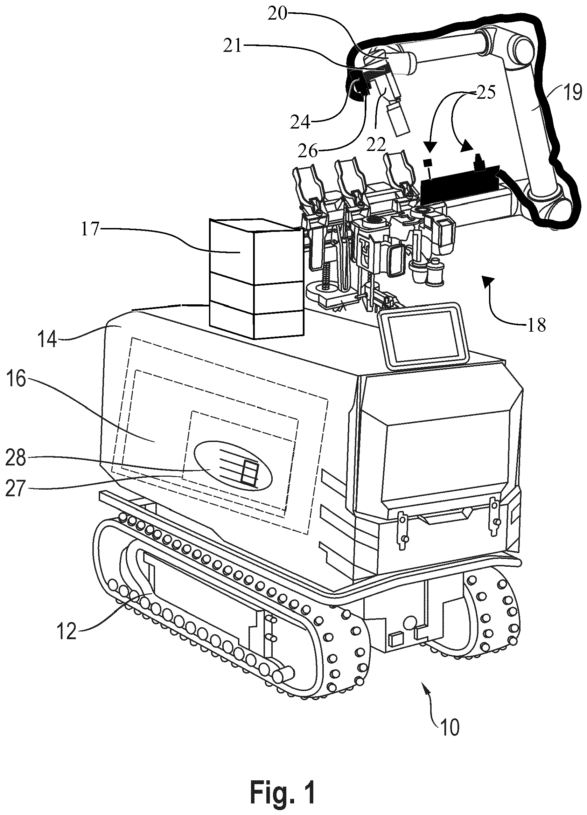

Der Bauroboter 10, insbesondere der Roboterarm 18, kann noch weitere Vorrichtungen, beispielsweise ein Prisma, ein Farbsprühgerät, einen Distanzmesser, eine Positions- und / oder Lage-Bestimmungslogik, weitere Kameras und / oder dergleichen aufweisen, auch wenn diese aus Vereinfachungsgründen in Fig. 1 nicht dargestellt sind.

Der Bauroboter 10 ist zur Ausführung von Bauaufgaben, beispielsweise von Bohrarbeiten in Decken und Wänden, auf einer Baustelle, insbesondere auf einer Hochbau-Baustelle, ausgebildet.

Ferner weist der Bauroboter 10 eine im Steuerraum 16 angeordnete Steuerung **27** auf. Die Steuerung 27 umfasst eine Rechnereinheit mit einer Speichereinheit **28.**

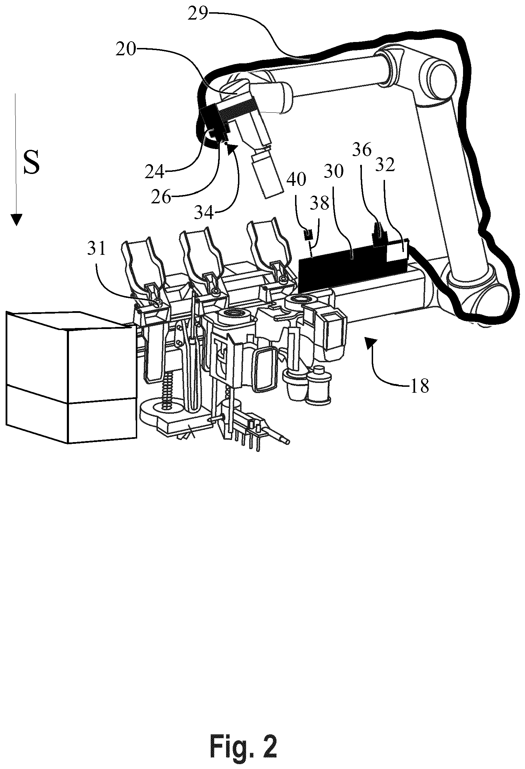

Die Steuerung 27 ist mit ausführbarem Programmcode ausgestattet. Der Programmcode kann abrufbar in der Speichereinheit 28 gespeichert sein und kann auf der Rechnereinheit ausgeführt werden. Die Steuerung 27 ist mit Hilfe des Programmcodes eingerichtet, Aufnahmen des Sensors 24 auszuwerten. Die Aufnahmen, also Sensorsignale des Sensors 24, werden verwendet, um eine Verschmutzung der Sensoroberfläche 26 zu detektieren. Die Steuerung 27 ist mit Hilfe des Programmcodes ferner eingerichtet, bei Detektion von Schmutz auf der Sensoroberfläche 26 die Sensoroberfläche 26 mit einer im Zusammenhang mit Fig. 2 näher beschriebenen Reinigungsvorrichtung zu reinigen. Dazu ist die Steuerung 27 mit Hilfe des Programmcodes eingerichtet, den Sensor 24 zur Reinigung in einen Wirkbereich **25** der Reinigungsvorrichtung zu bringen, insbesondere so dicht an die Reinigungsvorrichtung zu bewegen, sodass die Reinigungsvorrichtung den Sensor 24, insbesondere die Sensoroberfläche 26, reinigen kann.

**Fig. 2** zeigt den Roboterarm 18 mit seinem Endeffektor 20 in einer vergrößerten Darstellung.

Zu erkennen ist der als Kamera ausgebildete Sensor 24 mit seiner Sensoroberfläche 26.

An die Sensoroberfläche 26 ist ein Schlauch 29 herangeführt. Der Schlauch 29 bildet einen Teil einer Reinigungsvorrichtung **30.** Er ist entlang des Arms 19 geführt. Er reicht von der übrigen Reinigungsvorrichtung 30 bis an die Sensoroberfläche 26. Ein Teil der Reinigungsvorrichtung 30 ist an einem Werkzeugwechsler **31** angeordnet. Der Werkzeugwechsler 31 befindet sich am Roboterarm 18, insbesondere an der Hubvorrichtung 17. Die Reinigungsvorrichtung 30 weist eine Blasvorrichtung **32** auf. Die Blasvorrichtung 32 umfasst eine Pumpe, um Druckluft durch den Schlauch 29 zu pumpen. Die Druckluft kann am anderen Ende des Schlauchs 29 aus dem Schlauch 29 austreten und über die Sensoroberfläche 26 strömen. Eventuell an der Sensoroberfläche 26 anhaftender Schmutz **34** kann somit durch die Druckluft abgelöst werden. Wie in der Stellung gemäß Fig. 2 zu erkennen, kann der Arm 19 so eingestellt sein, dass die Sensoroberfläche 26 zumindest teilweise nach unten weist, sodass sich der Schmutz auch schwerkraftbedingt entsprechend der Schwerkraftrichtung S von der Sensoroberfläche 26 lösen kann oder zumindest die Ablösung durch die Druckluft schwerkraftbedingt unterstützt ist.

Die Reinigungsvorrichtung 30 weist weiter einen Sprühkopf **36** auf, der Reinigungsflüssigkeit nach oben sprühen kann. Neben dem Sprühkopf 36 ist ein Wischer **38** angeordnet. Der Wischer 38 weist eine längliche Wischlippe **40** auf. Somit kann zur weiteren Reinigung der Sensor 24, insbesondere die Sensoroberfläche 26, durch die Steuerung 27 (siehe Fig. 1) zuerst entlang dem Sprühkopf 36 geführt werden, um den Sensor 24, insbesondere die Sensoroberfläche 26, zu befeuchten. Anschließend kann er durch die Steuerung 27 über den Wischer 38 geführt werden, um Schmutz und Reste der Reinigungsflüssigkeit von dem Sensor 24, insbesondere der Sensoroberfläche 26, zu entfernen.

### Bezugszeichenliste

- 10: Bauroboter
- 12: Fahrplattform
- 14: Gehäuse
- 16: Steuerraum
- 17: Hubvorrichtung
- 18: Roboterarm
- 19: Arm
- 20: Endeffektor
- 21: Wechselschnittstelle
- 22: Werkzeug
- 24: Sensor
- 25: Wirkbereich
- 26: Sensoroberfläche
- 27: Steuerung
- 28: Speichereinheit
- 29: Schlauch
- 30: Reinigungsvorrichtung
- 31: Werkzeugwechsler
- 32: Blasvorrichtung
- 34: Schmutz
- 36: Sprühkopf
- 38: Wischer
- 40: Wischlippe
- S: Schwerkraftrichtung

## Patentansprüche

1. **Bauroboter (10)** zur Ausführung von Bauaufgaben, beispielsweise auf einer Hochbau-Baustelle oder einer Tiefbau-Baustelle, umfassend eine Fahrplattform (12) sowie einen an der Fahrplattform (12) angeordneten Roboterarm (18), wobei an dem Roboterarm (18) ein Sensor (24) mit wenigstens einer Sensoroberfläche (26) angeordnet ist,
**dadurch gekennzeichnet,**
**dass** der Bauroboter (10) eine Reinigungsvorrichtung (30) zur Reinigung des Sensors (24) aufweist.

2. Bauroboter (10) nach dem vorherigen Anspruch, **dadurch gekennzeichnet, dass** die Reinigungsvorrichtung (30) eine Saugvorrichtung und / oder eine Blasvorrichtung (32) umfasst.

3. Bauroboter (10) nach einem der vorherigen Ansprüche, **dadurch gekennzeichnet, dass** die Reinigungsvorrichtung (30) einen Wischer (38) umfasst.

4. Bauroboter (10) nach einem der vorherigen Ansprüche, **dadurch gekennzeichnet, dass** die Reinigungsvorrichtung (30) einen Sprühkopf (36) zum Sprühen eines Reinigungsmittels aufweist.

5. Bauroboter (10) nach einem der vorherigen Ansprüche, **dadurch gekennzeichnet, dass** der Bauroboter (10) eine Steuerung (27) aufweist, die eingerichtet ist, den Roboterarm (18) so zu steuern, dass die Sensoroberfläche (26) in einen Wirkbereich (25) der Reinigungsvorrichtung (30) gelangt.

6. Bauroboter (10) nach einem der vorherigen Ansprüche, **dadurch gekennzeichnet, dass** der Bauroboter (10) eingerichtet ist, eine Verschmutzung des Sensors (24) zu detektieren.

7. Bauroboter (10) nach einem der vorherigen Ansprüche, **dadurch gekennzeichnet, dass** der Bauroboter (10) eingerichtet ist, die Verschmutzung durch Auswertung eines vom Sensor (24) erzeugten Sensorsignals zu detektieren.

8. Bauroboter (10) nach einem der vorherigen Ansprüche, **dadurch gekennzeichnet, dass** zumindest ein Teil der Reinigungsvorrichtung (30), insbesondere die Saugvorrichtung und / oder die Blasvorrichtung (32), an einem Werkzeugwechsler (31) des Bauroboters (10) angeordnet sind.

9. Bauroboter (10) nach einem der vorherigen Ansprüche, **dadurch gekennzeichnet, dass** ein Schlauch (29) von der Blasvorrichtung (32) an die Sensoroberfläche (26) geführt ist, sodass bei Betrieb der Blasvorrichtung (32) ein Fluid, beispielsweise Druckluft, aus dem Schlauch (29) auf die Sensoroberfläche (26) strömt.

10. Bauroboter (10) nach einem der vorherigen Ansprüche, **dadurch gekennzeichnet, dass** ein Schlauch (29) von der Saugvorrichtung an die Sensoroberfläche (26) geführt ist, sodass bei Betrieb der Saugvorrichtung ein Fluid, beispielsweise Luft, von der Sensoroberfläche (26) in den Schlauch (29) strömt.

11. Bauroboter (10) nach einem der vorherigen Ansprüche, **dadurch gekennzeichnet, dass** der Sensor (24) ein optischer Sensor (24) ist, beispielsweise eine Kamera oder ein optischer Distanzmesser.
